Europäisches Patentamt

European Patent Office

Office européen des brevets

(19)

(11) Publication number: **0 136 275**
A1

(12) **EUROPEAN PATENT APPLICATION**

(21) Application number: **84850248.0**

(22) Date of filing: **24.08.84**

(51) Int. Cl.⁴: **B 27 K 3/16**

(30) Priority: **29.08.83 SE 8304672**

(71) Applicant: **Boliden Aktiebolag, Box 5508,
S-114 85 Stockholm (SE)**

(43) Date of publication of application: **03.04.85
Bulletin 85/14**

(72) Inventor: **Gunnarsson, Knut Lennart, Birkagatan 135,
S-252 60 Helsingborg (SE)**

(84) Designated Contracting States: **AT BE CH DE FR GB IT
LI LU NL SE**

(74) Representative: **Inger, Lars Ulf Bosson et al, Boliden AB
Patent & Trade Marks Box 5508, S-114 85 Stockholm
(SE)**

(54) **An agent for preventing the attack of mould on wood.**

㊐ The present invention relates to the use of selenium salts for preventing the attack of primarily mould and secondarily putrefaction fungi on wood, primarily wood intended for construction purposes, and a method for treating wood with selenium salts, preferably inorganic salts.

EP 0 136 275 A1

ACTORUM AG

## AN AGENT FOR PREVENTING THE ATTACK OF MOULD ON WOOD

### Technical Field

The present invention relates to the use of certain salts, preferably inorganic salts, for preventing the attack on wood of primarily mould and secondarily putrefaction fungis; and also to a method of using said salts.

The object of the present invention is to provide a possibility of preventing the attack on wood, and in particular building and construction timber, of primarily mould and secondarily of putrefaction fungis, thereby to prevent decaying of the wood.

### Background Art

During the last ten years, damage to newly erected buildings due to mould and fungis has increased progressively. As a result of making buldings more air-tight, in response to energy-saving demands, the timber used in the construction thereof is unable to dry-out and therefore remains moist, enabling mould to quickly take root and cause primary damage, and thereafter decaying fungis to take root, resulting in the rapid break-down of the wood. Cases are known in which such fungis attack has totally destroyed the timbers of a building within the space of a few years. In addition to destroying the wood and timbers of a building, the attack by mould also creates hygiene problems in dwelling houses, since many people become allergic and are forced to leave their homes.

The cause of mould attack is also to be found in the choice of other building timber than pine-based timbers, such as pine sapwood, spruce and wood from broad-leaf trees (hard-wood). Although pinewood can be pressure-impregnated with an arsenic-containing impregnating agent, these agents do not prevent mould attack on the wood. Moreover, the methods employed are expensive, since they require the use of an autoclave of limited capacity. It is not possible to pressure-impregnate spruce and broad-leaf wood.

Another reason for mould attack is that the wood and timber used is far too green, i.e. it has not been left to dry-out properly. This drying of the wood also relates to costs, since it requires the supply of energy.

2

0136275

In economic terms, mould attack causes very high losses and costs. Obviously, the task of replacing mould-decayed floor joist frame-structures etc in a house is both complicated and highly expensive. The work in repairing window frames and the joists and rafters of ceilings is also expensive, although simpler than the task presented in the former case.

The costs can be calculated in hundreds of millions of Swedish kronor each year, in addition to the social and medical hygiene problems which occur. Consequently, it is particularly essential that such mould attack is prevented in a simple and rational manner.

### Description of the Present Invention
It has now been surprisingly found that these problems can be resolved and overcome in a simple and rational manner by treating wood with selenium salts, optionally together with a substance capable of fixing the selenium salt in the wood.

This treatment can be effected simply and rationally in a variety of ways. For example, the wood can be dipped in a solution of selenium salt; brushed or sprayed and/or pressure-impregnated (vacuum-pressure method) with such a solution.

Other characterizing features of the invention are set forth in the following claims.

The invention will now be described with reference to a series of tests relating to the prevention of mould on pine sapwood with the aid of selenium.

Eleven groups of pine-sapwood rods were used, with four rods in each group. Each rod measured 15x15x75 mm. The groups were treated by the vacuum-pressure impregnation method with an aqueous solution of hydrogen selenite of varying concentration and in the presence or absence of a fixation agent, which when used had the form of copper sulphate. The eleventh group was used as a check group.

Each group was placed in its respective tank, containing sand and ground, mould-contaminated decayed wood. The sand was held moist to a state of near-wetness during the whole time taken to carry out the tests.

| Rod No | Weight (dry) g | Solution (conc) mg/l | | Absorbed solution g/100 g wood | Absorbed Me mg/100 g wood | | Decay after 9 years |
|--------|----------------|------|------|--------------------------------|---------------------------|------|---------------------|
| | | Se | Cu | | Se | Cu | |
| 1- 4 | 24.54 | 200 | – | 146 | 29 | – | –[1] |
| 5- 8 | 27.61 | 300 | – | 140 | 42 | – | –[1] |
| 9-12 | 26.90 | 400 | – | 140 | 56 | – | –[1] |
| 13-16 | 40.42 | 500 | – | 137 | 69 | – | Decay [2] |
| 17-20 | 30.21 | 200 | 400 | 152 | 30 | 61 | 0 |
| 21-24 | 33.36 | 250 | 400 | 160 | 40 | 64 | 0 |
| 25-28 | 30.00 | 300 | 400 | 166 | 50 | 66 | Attack in the odd corner |
| 29-32 | 30.15 | 200 | 500 | 162 | 32 | 81 | 0 |
| 33-36 | 31.30 | 250 | 500 | 162 | 41 | 81 | 0 |
| 37-40 | 30.07 | 300 | 500 | 168 | 50 | 84 | 0 |
| 41-44 | 29.94 | – | – | – | – | – | Completely decayed to "flour" |

[1] The samples happened to be eliminated after 6 years, but were then fully intact.

[2] As a result of leaching, since the selenium was not fixated, signs of mould attack could be seen. After 8 years, there was no sign of such attack.

The present invention also includes selenium oxide, there being formed in aqueous solution selenite-ions, with hydrogen as the cation.

When selenium sulphide is used, it is suitably dissolved in ethanol.

Copper sulphate or some other water-soluble copper salt is preferably used to fix the selenium salt.

4

0136275

## CLAIMS

1. The use of selenium salt when treating wood to prevent the attack thereon of mould and putrefaction fungi, optionally in combination with a selenium-salt fixation agent.

2. The use according to claim 1, characterized in that selenium salt is used in an amount of up to 200 mg Se/100 g dry wood.

3. The use according to claims 1-2, characterized in that when pressure-impregnating the wood there is used a solution containing 100-400 mg Se per litre.

4. The use according to claims 1-2, characterized in that in other application forms there is used a solution containing 200-1200 mg Se per litre.

5. The use according to claims 1-4, characterized in that selenium salt is used in an absorbed quantity of 30-70 mg Se per 100 g dry wood.

6. The use according to claims 1-5, characterized by using selenium sulphide and/or selenite, and/or selenate, with sodium, potassium, copper, calcium, hydrogen and/or chromium cations.

7. The use according to claims 1-6, characterized by adding a fixation agent for fixing selenium salt used in the wood.

8. The use according to claim 7, characterized by using a copper salt as the fixation agent.

9. The use according to claim 8, characterized by using a copper salt to an absorbed quantity of at least 50 mg Cu per 100 g dry wood, preferably 50-115 mg Cu per 100 g dry wood.

10. A method for treating wood in order to prevent the attack of mould and putrefaction fungi thereon, characterized by dipping, spraying, brushing, and/or pressure-impregnating the wood in or with a solution of a selenium salt, optionally in combination with a fixation agent for fixing the selenium in the wood.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | GB-A-244951 (C DICKENS) *The whole document* | 1-10 | B27K 3/16 |
| X | CHEMICAL ABSTRACTS, vol. 48, no.1 January 1954, column no. 317e, Columbus Ohio (USA); K. SVALBE: "Use of selenium and its compounds for conservation of wood". & LATVIJAS PSR ZINATNU AKAD. VESTIS 1949, No 6, 101-16. *Abstract* | 1-10 | |
| X | US-A-1962005 (M. DARRIN) *Claims 1, 25; pag. 1, line 56-64; page 2, line 25-32* | 1-6,10 | |
| A | GB-A-821872 (THE BRITISH RUBBER PRODUCERS' RESEARCH ASSOCIATION) *the claims* | 1-6 | **TECHNICAL FIELDS SEARCHED (Int. Cl. ³)** B 27 K |
| A | CHEMICAL ABSTRACTS, Vol. 48, no. 2 January 1954, column no. 931c, Columbus Ohio (USA); B. SCHULZE et al.: "Results of a comparative testing of the fungicidal effectiveness of wood preservatives". & Wiss. Abhandl.deut.Material-prüfungsanstalt. 2, No. 7, 1-40 (1950) *Abstract* | 1-6 | |

The present search report has been drawn up for all claims

| Place of search | Date of completion of the search | Examiner |
|---|---|---|
| STOCKHOLM | 20-11-1984 | ERIKSSON S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82